Europäisches Patentamt

European Patent Office

Office européen des brevets

(11) Publication number: **0 416 380 A1**

# EUROPEAN PATENT APPLICATION

(21) Application number: 90116163.8

(22) Date of filing: 23.08.90

(51) Int. Cl.⁵: **F16D 13/68**

(30) Priority: 06.09.89 PL 281327

(43) Date of publication of application:
13.03.91 Bulletin 91/11

(84) Designated Contracting States:
DE FR GB IT

(71) Applicant: FABRYKA SAMOCHODOW
OSOBOWYCH ZAKLAD SPRZEGIEL
ul. 1-go Maja 40
PL-67120 Kozuchow(PL)

(72) Inventor: Niemcow, Stefan
ul. 22 Lipca 14b/12
P-67-120 Kozuchow(PL)

(74) Representative: Füchsle, Klaus, Dipl.-Ing. et al
Hoffmann . Eitle & Partner Patentanwälte
Arabellastrasse 4
W-8000 München 81(DE)

(54) **Main torsional vibration damper in clutch disc for auto-motive vehicles.**

(57) Main torsional vibration damper consisting of L-shaped frictional washers (15, 16) concentrically inwardly mounted with a disc (5) or with a driving washer (19).

Fig. 3

# MAIN TORSIONAL VIBRATION DAMPER IN CLUTCH DISC FOR AUTO-MOTIVE VEHICLES

The subject of this invention is main torsional vibration damper in a clutch disc for auto-motive vehicles, particularly that of a clutch disc provided with an idle running torsional vibration damper. Main dampers of torsional vibration in clutch disc known from the French Patent Specification No. 2 494 795 is composed of many helical springs situated over the circumference in suitable seats, that is holes made in the flange and elastic disc. Springs are protected against falling out from the seats by bands in side discs. The damper also includes frictional washers situated on both sides of the flange. Frictional washer situated between the flange and the elastic disc is mounted on clutch disc hub, whereas frictional washer situated between the flange and the side disc has special journals on its surface, which are accommodated with a small assembly play in the holes made in the side disc. Between said frictional washer and side disc there is a special spring washer. The main torsional vibration damper thus made cannot be used in the disc of a clutch provided with an idle running torsional vibration damper. The latter makes impossible mounting of the frictional washers directly on the clutch disc hub. Spring washer which exerts a pressure against said frictional washer with pins causes local non-uniform wear of said washer and the co-acting surface of the flange.

This invention has been aimed at elimination of this drawback and inconvenience of the main damper of torsional vibrations so far known.

Acc. to the invention frictional washers of the main damper have suitable flanges with which they are concentrically mounted with a small assembly play, either in the hole of the elastic disc, or in the hole of the driving washer.

The main torsional vibration damper thus made enables idle running torsional vibration damper to be mounted in the clutch disc and application of a driving washer eliminates local wear of frictional washer and the co-acting surface of the flange.

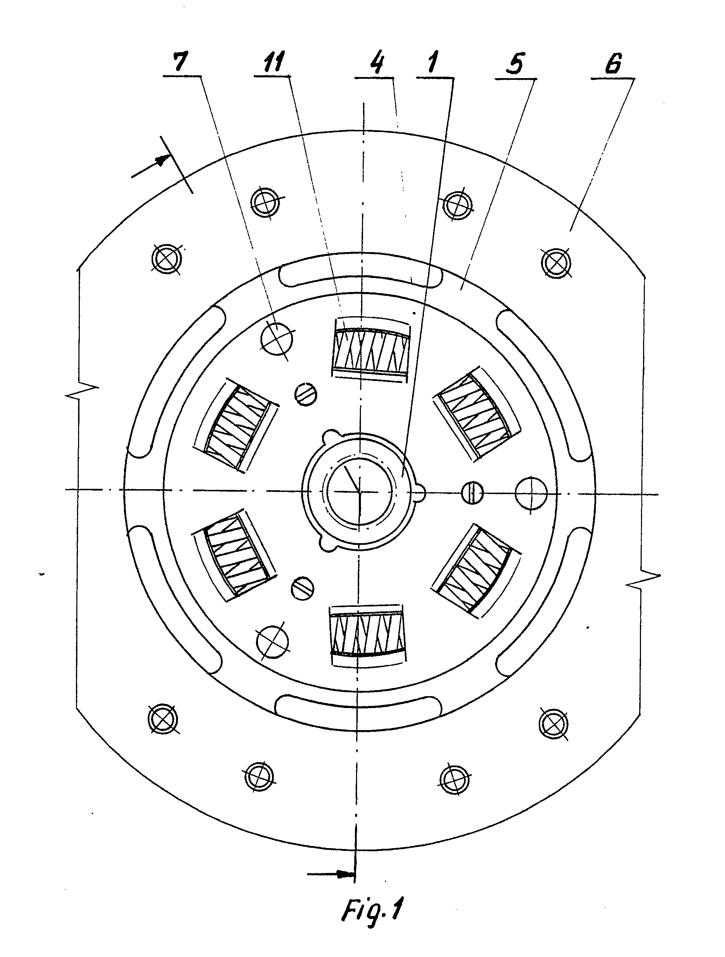

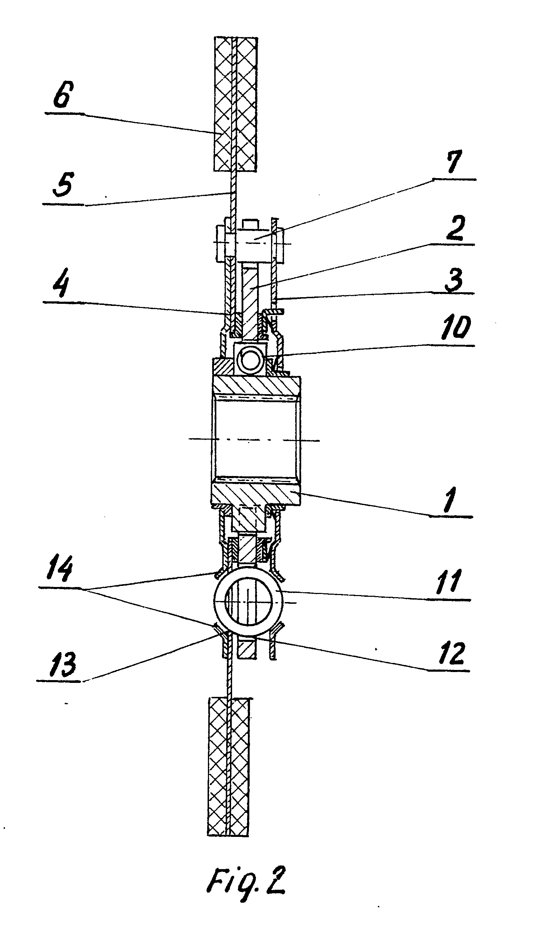

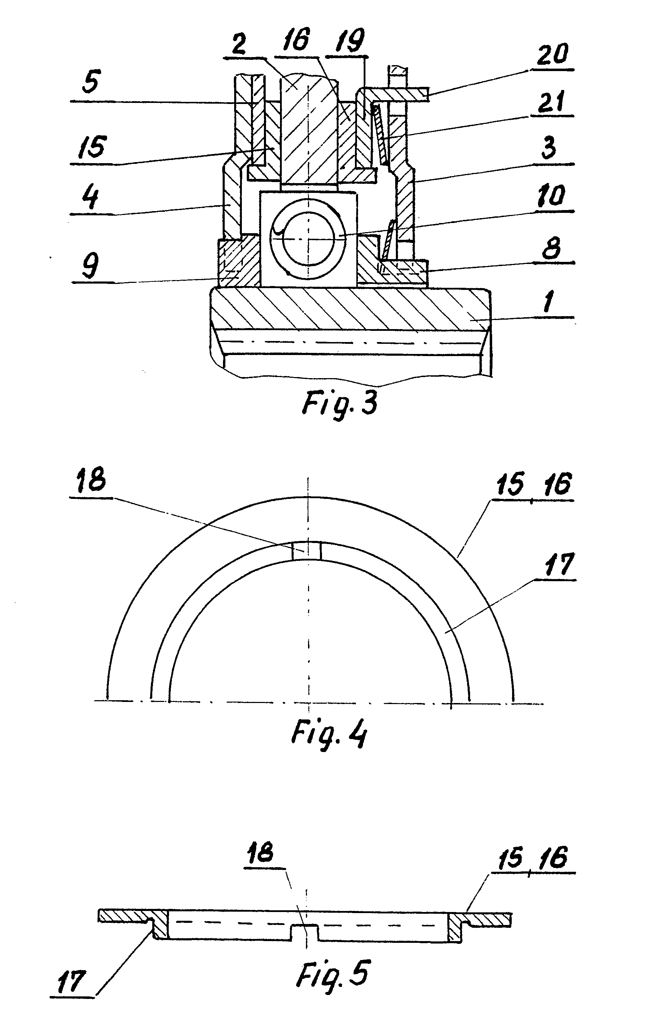

The subject of the invention has been shown on an example of embodiment in the accompanying drawing, wherein fig. 1 shows side view of the clutch disc, fig. 2 presents vertical section of said clutch disc, fig. 3 shows a fragment of the clutch disc in vertical section, fig. 4 visualizes side view of frictional washer and fig. 5 presents vertical section of frictional washer.

Clutch disc having main torsional vibration damper acc. to the invention consists of a hub 1, and a flange 2 mounted on it and elastically coupled with it. On said hub 1 on one side of the flange 2 there lies also side disc 3, and on the other side of the flange 2, side disc 4 and elastic disc 5 with frictional lining 6 mounted concentrically to it. Side discs 3 and 4 are distance rivets 7. On the hub 1 there are also mounted frictional elements 8 and 9 of idle running torsional vibration damper 10. Main torsional vibration damper is composed of multiple helical springs 11 situated over the circumference in suitable seats, that is holes 12 and 13 made in the flange 2 and elastic disc 5. Springs 11 are protected against falling out be special bends 14 made in the side discs 3 and 4. Main torsional vibration damper includes also frictional washers 15 and 16 situated on both sides of said flange 2.

Frictional washers 15 and 16 have a flange 17 with softening cuts 18. Frictional washer 16 is mounted concentrically with flange 17 in the hole of elastic disc 5, whereas frictional washer 16 is mounted also with a concentric flange 17 in the hole of driving washer 19. Washer 19 is mounted concentrically by means of driving elements 20 to side disc 3. Between the side disc 3 and the washer 19 there is spring washer 21 for exerting pressure on frictional washer 16 and through flange 2 on frictional washer 15. In an alternate design between the frictional washer 15 and elastic disc 5 there is driving washer 19.

Reference signs in the claims are intended for better understanding and shall not limit the scope.

## Claims

Main torsional vibration damper in clutch disc for automotive vehicles, and particularly disc with idle running torsional vibration damper, consisting of several helical springs located in seats, and of frictional washers situated on the both sides of the clutch disc flange characterized in that said frictional washers (15, 16) have a flange (17) with which there are concentrically mounted with a small assembly play in the hole of elastic disc (5), or in the hole of the driving washer (19).

Fig.1

*Fig. 2*

Fig. 3

Fig. 4

Fig. 5

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 616 301 (LUK) <br> * Pages 36-38; figure 9 * | 1 | F 16 D 13/68 |
| A | DE-A-3 508 374 (DAIKIN SEISAKUSHO K.K.) <br> * Pages 11-13; figure 6 * | 1 | |
| A | FR-A-2 613 800 (VALEO) <br> * Page 8, lines 2-15; figure 3 * | 1 | |

TECHNICAL FIELDS
SEARCHED (Int. Cl.5)

F 16 D

The present search report has been drawn up for all claims

| Place of search | Date of completion of search | Examiner |
|---|---|---|
| The Hague | 27 November 90 | BEGUIN C.P. |